# EUROPÄISCHE PATENTSCHRIFT

(11) **EP 0 941 645 B1**
(45) Veröffentlichungstag und Bekanntmachung des Hinweises auf die Patenterteilung: **02.05.2002**
(21) Anmeldenummer: 99104357.1
(22) Anmeldetag: 04.03.1999
(51) Int. Cl.: A01C 7/04

(54) **Sähscheibe für ein Einzelkornsähgerät**
Seedingplate for a precision seeddrill
Disque à semences pour un semoir de précision

(30) Priorität: 07.03.1998 DE 29804024 U
(43) Veröffentlichungstag der Anmeldung: 15.09.1999
(73) Patentinhaber: Kverneland Accord GmbH & Co. KG, 59494 Soest (DE)
(72) Erfinder: Schneiders, Walter, 52355 Düren-Kufferath (DE)
(74) Vertreter: Habbel, Ludwig (Lutz), Dipl.-Ing.

(56) Entgegenhaltungen:
- EP-A- 0 636 306
- FR-A- 2 579 407
- US-A- 4 628 841

## Beschreibung

Die Erfindung betrifft eine Säscheibe für ein Einzelkornsägerät gemäß dem Oberbegriff des Hauptanspruches.

Säscheiben sind vielfach in Einzelkornsägeräten in Betrieb und dienen zur Vereinzelung der abzulegenden Saatkörner.

Die Säscheiben, die an ihrem Außenumfang Vertiefungen aufweisen, die nach außen hin offen sind und als Samenzellen für die Aufnahme von Saatkörnern dienen, ermöglichen vor allem das Ausbringen pillierter und runder Saatgüter, wobei die besten Ergebnisse dann erbracht werden, wenn der Durchmesser des jeweiligen Saatkornes mindestens der Säscheibenstärke entspricht.

Wenn Saatgut mit kleineren Durchmessern ausgebracht werden sollen, kann es vorkommen, daß zwei Saatkörner in eine Samenzelle geraten und entweder führt diese Doppelbelegung der Samenzelle dazu, daß an einem Punkt zwei Saatkörner an den Boden abgegeben werden oder aber, wenn die Durchmesser der Saatkörner etwas größer sind, ist zu befürchten, daß ein weit überstehendes Saatkorn bei der Drehung der Säscheibe an einer Abdeckung der Säscheibe zerbrochen wird und die entstehenden Trümmer behindern dann die weitere Aussaat, da der beschriebene Vorgang sich immer wiederholt.

Kurzum: Bei den herkömmlichen Säscheiben kann kleinkörniges Saatgut dazu führen, daß nicht präzise ausgesät wird bzw. durch die Zerstörung von Saatgut der Sävorgang unterbrochen wird und entweder zu lückigem Bestand oder zu einem stark reduzierten Ertrag bei der Ernte führt.

Der Erfindung liegt die Aufgabe zugrunde, eine Säscheibe derart auszubilden, daß sie die einwandfreie Aussaat von besonders feinkörnigem Saatgut ermöglicht.

Diese der Erfindung zugrundeliegende Aufgabe wird durch die Lehre des kennzeichnenden Teiles des Hauptanspruches gelöst.

Mit anderen Worten ausgedrückt wird eine Säscheibe vorgeschlagen, die Samenzellen aufweist, deren in Drehrichtung der Säscheibe gesehen rückseitige Wandung eine reduzierte Wandstärke aufweist, um sicherzustellen, daß eine Doppelbelegung dieser Samenzelle mit zwei Körnern nicht möglich ist.

Vorteilhafte Ausgestaltungen der Erfindung sind in den Unteransprüchen erläutert.

Ein Ausführungsbeispiel der Erfindung ist nachfolgend in den Zeichnungen wiedergegeben, wobei
- Fig. 1: eine Einzelkornsämaschine mit davon abgenommener Säscheibe und deren Abdeckung darstellt,
- Fig. 2: stellt eine Säscheibe mit Samenzellen dar,
- Fig. 3: zeigt einen Ausschnitt aus der Säscheibe gemäß Fig. 2 und
- Fig. 4: stellt eine Draufsicht auf die Säscheibe mitsamt daran angeordneten Saatkörnern dar.

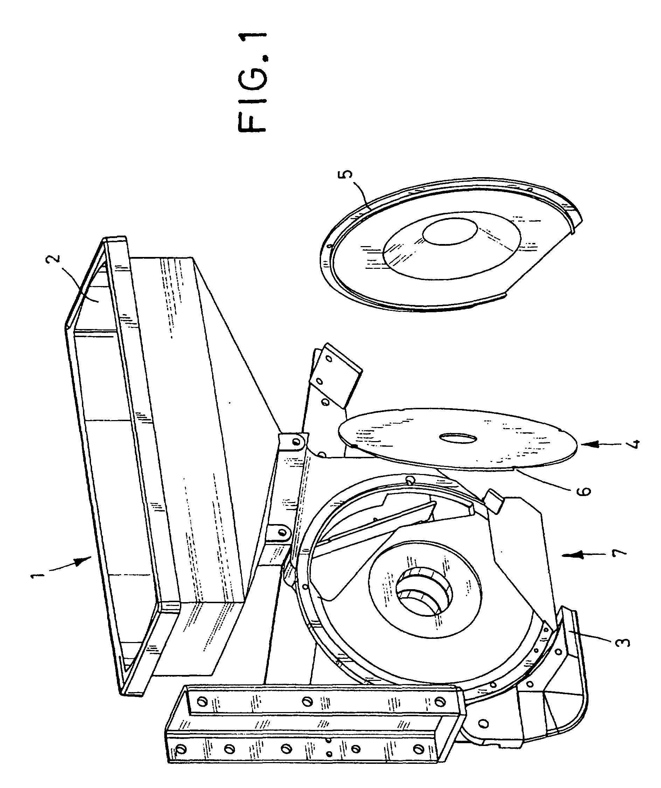

Bezugnehmend auf Fig. 1 besteht eine Einzelkornsämaschine 1 im wesentlichen aus einem Saatgutbehälter 2, einem den Boden öffnenden Schar 3 sowie einer Säscheibe 4, die im eingebauten Zustand von einer Abdeckung 5 an ihrer Vorderseite abgedeckt wird. Die Säscheibe 4 ist drehbar im eingebauten Zustand an der Einzelkornsämaschine 1 angeordnet und ihr werden Saatkörner von dem Saatgutbehälter 2 zugeleitet und von sogenannten Samenzellen 6, die an dem Außenumfang der Säscheibe 4 angeordnet sind, wird jeweils ein Saatkorn aufgenommen und nach einer teilweisen Drehung der Säscheibe 4 werden diese vereinzelten Saatkörner im Abgabebereich 7 an den Boden bzw. die geöffnete Furche abgegeben.

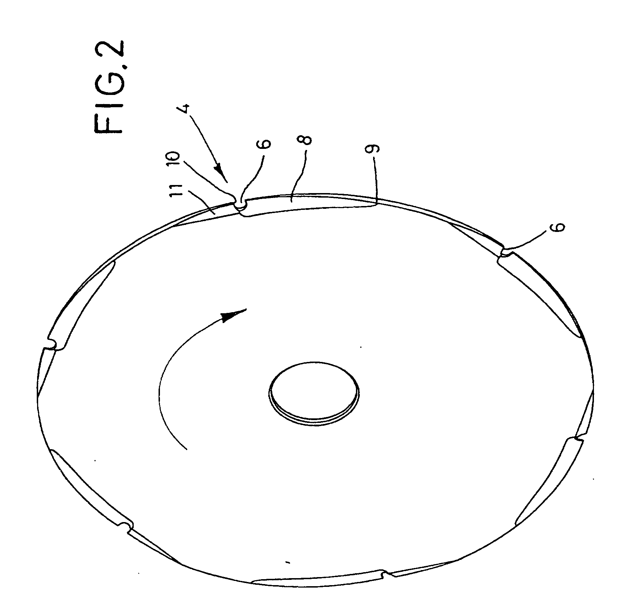

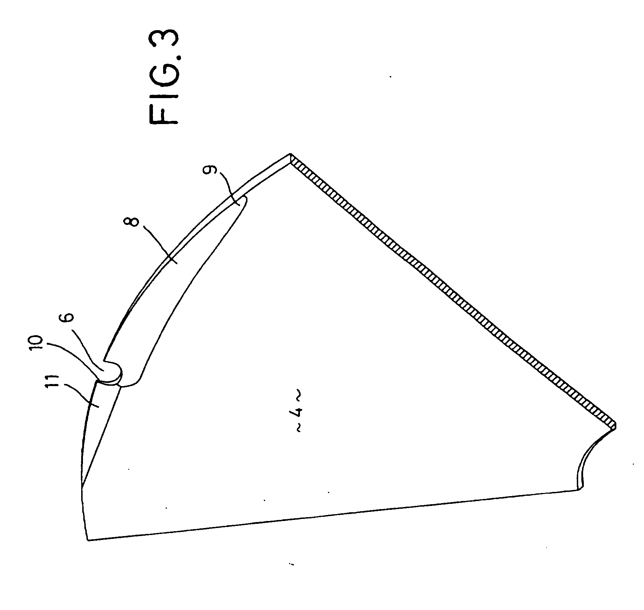

In den Fig. 2 und 3 ist die "Rückseite" der Säscheibe 4 deutlicher dargestellt und zunächst wird auf die Vielzahl der an dem Außenumfang der Säscheibe 4 angeordneten Samenzellen 6 hingewiesen. In Drehrichtung der Säscheibe 4 gesehen sind vor den Samenzellen 6 sogenannte Einlaufschrägen 8 vorgesehen, die zur Samenzelle 6 hin münden. Diese Einlaufschrägen 8 sind Vertiefungen an der Oberseite der Säscheibe 4, die im wesentlichen länglich ausgebildet sind und in diesem Ausführungsbeispiel wird im Bereich der Einlaufschrägen 8 die Stärke der Säscheibe 4 vermindert. Diese Verminderung der Stärke der Säscheibe 4 erfolgt am Beginn 9 einer Einlaufschräge 8 nicht abrupt, sondern in flachem Winkel, d. h. vom Beginn 9 der Einlaufschräge ge-sehen erfolgt eine stetige Reduzierung der Stärke der Säscheibe 4 bis zum vorderen Rand der Samenzelle 6. Am hinteren Rand 10 der Samenzelle 6 ist wiederum die Stärke der Säscheibe 4 reduziert aufgrund der am hinteren Rand der Samenzelle 6 angeordneten Auslaufschräge 11, wobei im Bereich der Auslaufschräge 11 mit zunehmendem Abstand von der Samenzelle 6 die Stärke der Säscheibe 4 in flachem Winkel ansteigend ausgebildet ist.

Diese "Bearbeitungswinkel" der Einlaufschräge 8 und Auslaufschräge 11, d. h. das Maß der Reduzierung bzw. des Zunehmens der Säscheibenstärke 4 über eine gewisse Strecke kann gleich sein, wobei in diesem Ausführungsbeispiel der "Bearbeitungswinkel" der Auslaufschräge 11 steiler ausgebildet ist als der der Einlaufschräge 8, um somit zu ermöglichen, daß das Saatgut sanft in die Samenzelle 6 geleitet wird und wobei anschließend überschüssiges Saatgut aufgrund des steileren Bearbeitungswinkels der Auslaufschräge 11 schnell wieder abgeführt wird. Es ist vorteilhaft, wenn die Auslaufschräge 11 eine gewisse Mindestlänge aufweist, d. h. mindestens die Länge einer Samenzelle 6, um ene schonende Abführung des "doppelten" Saatgutes zu ermöglichen.

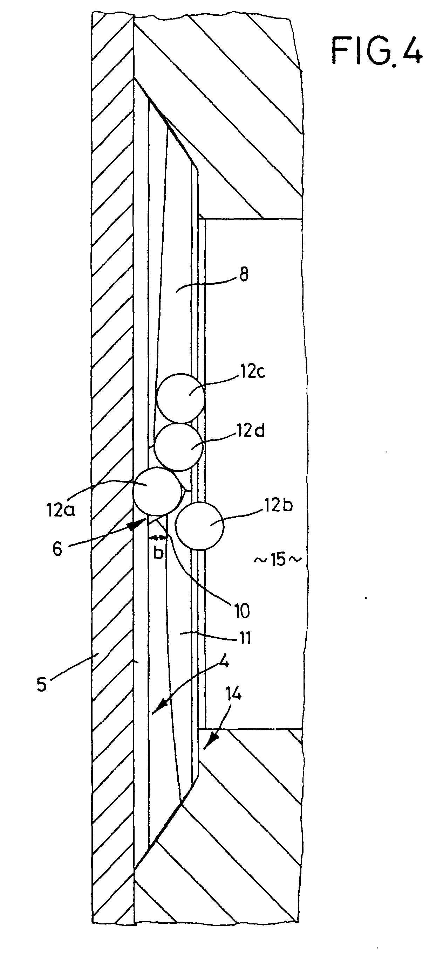

In Fig. 4 ist von oben eine Säscheibe 4 zu sehen, die an ihrer Vorderseite von der Abdeckung 5 abgedeckt wird. Es wird deutlich, daß im Bereich der Einlaufschräge 8 sich die Stärke der Säscheibe 4 reduziert und ebenfalls eine Reduzierung der Stärke der Säscheibe 4 ist im Bereich der Auslaufschräge 11 zu erkennen.

Einer Samenzelle 6 wurden vier Saatkörner zugeführt, wobei ein Saatkorn 12a sicher in der Samenzelle gehalten wird, da es bei der Drehung der Säscheibe 4 an dem hinteren Rand 10 der Samenzelle anliegt. Dabei ist in vorteilhafter Ausgestaltung der hintere Rand 10 etwas schräg ausgebildet und führt das Saatkorn 12a an den rückseitigen Bereich der Abdeckung 5. Ein zweites Saatkorn 12b wird aufgrund der reduzierten Dicke des hinteren Randes 10 der Samenzelle nicht mehr in der Samenzelle mitgeführt und wird daher an einem Aufnahmeraum 15 für überschüssiges Saatgut abgegeben. Ein Verklemmen des Saatkornes 12b mit den weiteren Abdeckwandungen 14 des Gehäuses ist nicht zu befürchten, da die Befüllung der Samenzellen nur im aufwärtsdrehenden Teil der Säscheibe stattfindet.

Je nach Durchmesser des verwendeten Saatgutes kann die Breite b der rückseitigen Wandung 10 der Samenzelle 6 verändert werden, um zu verhindern, daß sich zwei Saatkörner 12 in einer Samenzelle 6 befinden. Ebenfalls kann je nach Art des abzulegenden Saatgutes der Winkel der rückseitigen Wandung 10 der Samenzelle 6 zur Abdeckung 5 variiert werden. Bei Saatgut mit relativ großem Durchmesser wird man die Breite b etwas größer wählen als bei Saatgut mit geringerem Durchmesser, so daß bei aufgenommenem Saatkorn 12a die rückseitige Wandung 10 der Samenzelle 6 auf alle Fälle nicht über das aufgenommene Saatkorn 12a herüberragt. Zum Beispiel kann die Breite b in vorteilhafter Ausgestaltung geringer sein als der Durchmesser des Saatgutes, um eine Doppelbelegung zu verhindern. Zumindest ist es vorteilhaft, die Breite b nicht derart auszubilden, daß die Gefahr besteht, daß ein zweites Saatkorn in die Samenzelle 6 aufgenommen wird.

Der wesentliche Vorteil liegt darin, daß die Abdeckwandung 14 des Gehäuses grundsätzlich weiter entfernt von der Abdeckung 5 liegen kann und nur durch den Wechsel der Säscheibe kleine bzw. große rillenförmige Samen ausgebracht werden können.

## Patentansprüche

1. Säscheibe für ein Einzelkornsägerät mit mehreren am Außenumfang der Säscheibe angeordneten Samenzellen zur Aufnahme des Saatgutes, wobei die Säscheibe drehbar ausgebildet ist und zumindest teilweise von Wandungen abgedeckt ist, **gekennzeichnet durch** eine Auslaufschräge (11) am in Drehrichtung der Säscheibe (4) gesehen hinteren Rand (10) einer Samenzelle (6), in der die Stärke der Säscheibe (4) reduziert ist.

2. Säscheibe gemäß Anspruch 1, **gekennzeichnet durch** die Auslaufschräge (11), die in zunehmender Entfernung von der Samenzelle (6) flacher ausgebildet ist.

3. Säscheibe gemäß Anspruch 2, **gekennzeichnet durch** die Einlauf- und Auslaufschräge (8, 11), die einen unterschiedlichen Bearbeitungswinkel zur übrigen Oberfläche der Säscheibe (4) aufweisen.

4. Säscheibe gemäß Anspruch 3, **gekennzeichnet durch** den Bearbeitungswinkel der Einlaufschräge, der flacher ausgebildet ist als der Bearbeitungswinkel der Auslaufschräge (11).

5. Einzelkornsämaschine gemäß einem der vorhergehenden Ansprüche, **gekennzeichnet durch** eine zum Außenrand der Säscheibe (4) abfallende Oberfläche der Einlaufschräge (8) und/oder der Auslaufschräge (11).

6. Einzelkornsämaschine gemäß einem der vorhergehenden Ansprüche, **gekennzeichnet durch** die Anordnung der Einlaufschräge (8) und/oder der Auslaufschräge (11) auf der Seite der Säscheibe (4), die einen Aufnahmeraum (15) für überschüssiges, nicht von der Säscheibe (4) aufgenommenes Saatgut zugewandt ist.

7. Einzelkornsämaschine gemäß einem der vorhergehenden Ansprüche, **gekennzeichnet durch** die Breite (b) des hinteren Randes (10) der Samenzelle (6), die geringer ist als der Durchmesser des auszubringenden Saatgutes.

8. Einzelkornsämaschine gemäß einem der vorhergehenden Ansprüche, **gekennzeichnet durch** die Auslaufschräge (11), die mindestens die Länge einer Samenzelle (6) aufweist.

9. Einzelkornsämaschine gemäß einem der vorhergehenden Ansprüche, **gekennzeichnet durch** den hinteren Rand (10) der Samenzelle (6), der nicht rechtwinklig zum Umfang der Säscheibe (4), sondern schräg und der Auslaufschräge (11) abgewandt ausgebildet ist.

## Claims

1. Seeding disc for a single grain sowing machine, having a plurality of seed cells arranged at the outer circumference of the seeding disc for receiving seed, the seeding disc being arranged for rotation and covered at least in part by walls, **characterised by** an outflow incline (11) at the rear edge (10) of a seed cell (6), as seen in the direction of rotation of the seeding disc (4), in which the thickness of the seeding disc (4) is reduced.

2. Seeding disc according to claim 1, **characterised by** the outflow incline (11) being made flatter as the distance from the seed cell (6) increases.

3. Seeding disc according to claim 2, **characterised by** the inflow and outflow inclines (8, 11) having different operating angles with respect to the remainder of the surface of the seeding disc (4).

4. Seeding disc according to claim 3, **characterised by** the operating angle of the inflow incline being made flatter than the operating angle of the outflow incline (11).

5. Single grain sowing machine according to one of the preceding claims, **characterised by** a surface of the inflow incline (8) and/or outflow incline (11) sloping towards the outer edge of the seeding disc (4).

6. Single grain sowing machine according to one of the preceding claims, **characterised by** arranging the inflow incline (8) and/or outflow incline (11) on the side of the seeding disc (4) which is directed towards a reception chamber (15) for surplus seed not taken up by the seeding disc (4).

7. Single grain sowing machine according to one of the preceding claims, **characterised by** the width (b) of the rear edge (10) of the seed cell (6) being less than the diameter of seed that is to be discharged.

8. Single grain sowing machine according to one of the preceding claims, **characterised by** the outflow incline (11) having at least the length of a seed cell (6).

9. Single grain sowing machine according to one of the preceding claims, **characterised by** the rear edge (10) of the seed cell (6) not being perpendicular to the circumference of the seeding disc (4), but being inclined and directed away from the outflow incline (11).

## Revendications

1. Disque à semences pour un semoir monograine, comportant plusieurs cellules réceptrices de graines qui sont disposées au niveau de la périphérie extérieure du disque à semences afin de recevoir les semences, le disque à semences étant conçu de manière rotative et étant recouvert, du moins en partie, par des parois, **caractérisé par** une déclivité de sortie (11) au niveau du bord arrière (10), vu dans le sens de rotation du disque à semences (4), d'une cellule réceptrice de graines (6), déclivité dans laquelle l'épaisseur du disque à semences (4) est réduite.

2. Disque à semences selon la revendication 1, **caractérisé en ce que** la déclivité de sortie (11) est réalisée plus plate au fur et à mesure qu'elle s'éloigne de la cellule réceptrice de graines (6).

3. Disque à semences selon la revendication 2, **caractérisé par** des déclivités d'entrée et de sortie (8, 11), qui présentent un angle d'usinage différent par rapport au reste de la surface du disque à semences (4).

4. Disque à semences selon la revendication 3, **caractérisé en ce que** l'angle d'usinage de la déclivité d'entrée est réalisé plus plat que l'angle d'usinage de la déclivité de sortie (11).

5. Semoir monograine selon l'une des revendications précédentes, **caractérisé par** une surface inclinée, vers le bord extérieur du disque à semences (4), de la déclivité d'entrée (8) et/ou de la déclivité de sortie (11).

6. Semoir monograine selon l'une des revendications précédentes, **caractérisé par** la présence de la déclivité d'entrée (8) et/ou de la déclivité de sortie (11) sur le côté du disque à semences (4), qui est dirigé vers un espace récepteur (15) destiné à des semences en excès, qui ne sont pas reçues par le disque à semences (4).

7. Semoir monograine selon l'une des revendications précédentes, **caractérisé en ce que** la largeur (b) du bord arrière (10) de la cellule réceptrice de graines (6) est inférieure au diamètre des semences à débiter.

8. Semoir monograine selon l'une des revendications précédentes, **caractérisé en ce que** la déclivité de sortie (11) présente au moins la longueur d'une cellule réceptrice de graines (6).

9. Semoir monograine selon l'une des revendications précédentes, **caractérisé en ce que** le bord arrière (10) de la cellule réceptrice de graines (6) n'est pas perpendiculaire à la périphérie du disque à semences (4) mais est, au contraire, oblique et dirigé à l'opposé de la déclivité de sortie (11).
